# FASCICULE DE BREVET EUROPEEN

(11) **EP 0 603 119 B1**
(45) Date de publication et mention de la délivrance du brevet: **27.12.1996**
(21) Numéro de dépôt: 93810819.8
(22) Date de dépôt: 24.11.1993
(51) Int. Cl.: H02K 15/00, H02K 5/22

(54) **Stator de moteur électrique bobiné**
Bewickelter Ständer eines elektrischen Motors
Wound stator of an electric motor

(30) Priorité: 16.12.1992 FR 9215189
(43) Date de publication de la demande: 22.06.1994
(73) Titulaire: SOMFY, F-74300 Cluses (FR)
(72) Inventeur: Lemarchand, Philippe Marc, F-74440 Taninges (FR); Roger, Michel Alphonse Jean, F-74300 Magland (FR)
(74) Mandataire: Meylan, Robert Maurice

(56) Documents cités:
- FR-A- 2 550 981
- US-A- 1 753 554
- US-A- 4 000 764

## Description

La présente invention a pour objet un stator de moteur électrique bobiné comprenant des moyens pour le rangement d'une certaine longueur de fil de bobinage de stator dans l'attente de son branchement ultérieur.

L'invention concerne plus particulièrement un problème lié aux stators bobinés entre le moment où le stator a été muni de son bobinage et le moment où ce stator, associé à un rotor pour constituer un moteur, est monté dans un appareil, une machine ou un dispositif. Dans cet intervalle, le stator bobiné présente des fils plus ou moins longs sortant du bobinage et destinés au branchement du stator sur des bornes qui peuvent être plus ou moins éloignées du stator selon l'appareil dans lequel il est destiné à être monté. Dans cet intervalle, le stator est manipulé pour son stockage, son conditionnement, son transport et finalement son montage. Lors de chacune de ces manipulations, les fils sortant du stator sont exposés à toutes sortes de contraintes susceptibles d'endommager les fils, notamment de détériorer l'isolation, voire d'entraîner la rupture ou la coupure du conducteur. Dans l'un ou l'autre cas, un tel incident nécessite le démontage de l'appareil dans lequel le moteur a été monté et le remplacement du stator. Or, le coût d'un démontage et d'un stator bobiné est important.

Du brevet US 4 000 764, on connaît un appareil permettant d'enrouler une certaine longueur de fil de bobinage d'un stator sur des petits piliers fixés au stator. Cette solution ne permet de ranger qu'une faible longueur de fils et le fil enroulé serré sur un faible diamètre ne peut pas être déroulé aisément pour son branchement à une borne, borne qui doit en outre être proche, sans compter les risques de détérioration de l'isolation du fil lors de l'enroulement et du déroulement du fil.

L'invention a pour but de permettre le rangement d'une grande longueur de fils du stator de manière souple et d'éliminer les risques de détérioration de ces fils.

Le stator de moteur électrique bobiné selon l'invention est caractérisé en ce qu'il est équipé d'une pièce auxiliaire amovible munie, d'une part, de moyens d'accrochage temporaire au stator et, d'autre part, de moyens de fixation temporaire de l'extrémité des fils du bobinage du stator et qu'il présente des moyens d'accrochage complémentaires de ceux de la pièce auxiliaire, la pièce auxiliaire accrochée au stator constituant, avec le stator, un dispositif de rangement temporaire en vrac ou enroulés en bobine des fils du bobinage du stator.

Quelle que soit la longueur des fils attachés au stator, ceux-ci sont rangés, en particulier enfermés dans un logement, de telle sorte que le stator bobiné peut être manipulé sans risque pour ces fils et beaucoup plus aisément.

La pièce auxiliaire sera généralement enlevée lors du montage du moteur dans un appareil. Dans ce cas, elle pourra être, le cas échéant, réutilisée. La pièce auxiliaire peut également être utilisée comme connecteur.

Le dessin annexé représente, à titre d'exemple, huit modes d'exécution de l'invention.

La figure 1 est une vue partielle en demi-coupe axiale d'un stator bobiné selon un premier mode d'exécution.

La figure 2 est une vue analogue d'un deuxième mode d'exécution.

La figure 3 est une vue analogue d'un troisième mode d'exécution.

La figure 4 est une vue analogue d'un quatrième mode d'exécution.

La figure 5 est une vue analogue d'un cinquième mode d'exécution.

La figure 6 est une vue analogue d'un sixième mode d'exécution.

La figure 7 est une vue analogue d'un septième mode d'exécution.

La figure 8 est une vue partielle, à plus grande échelle, d'un huitième mode d'exécution.

La figure 9 représente un exemple de montage d'un stator selon la figure 8 dans un moteur tubulaire.

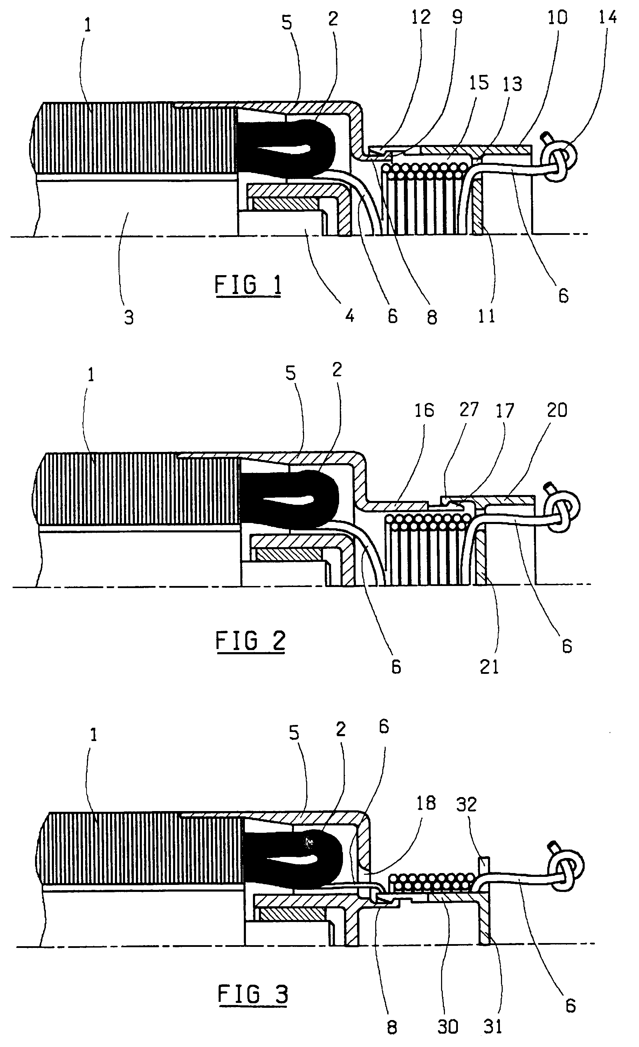

La figure 1 représente partiellement un moteur électrique constitué d'un stator 1 muni d'un bobinage 2 et d'un rotor 3 dont une extrémité de l'arbre 4 est montée rotativement dans la carcasse 5 du stator. Du bobinage du stator sort un toron de fils 6 pour sa connexion aux bornes d'une alimentation.

La carcasse 5 du stator présente un prolongement axial sous la forme d'un portée tubulaire cylindrique 8 dont l'extrémité est munie d'un bourrelet 9. Sur cette portée 8 est accrochée une pièce auxiliaire 10 de forme tubulaire et munie d'une paroi radiale 11. L'extrémité de la pièce auxiliaire 10 côté stator est fendue longitudinalement sur une certaine longueur de manière à former un certain nombre de languettes élastiques 12 se terminant par un crochet venant s'accrocher élastiquement sur le bourrelet 9 de la portée 8 du stator. Ce type d'accrochage par clipage est bien connu en soi. La paroi 11 de la pièce auxiliaire présente un trou 13 servant au passage du toron de fils 6 à l'extrémité duquel est formé un noeud 14 de manière à retenir l'extrémité du toron sur la pièce auxiliaire 10.

La pièce auxiliaire 10 forme, avec le stator, un logement 15 dans lequel une importante longueur de toron 6 peut être rangée. Ce rangement peut se faire tout simplement en vrac ou par enroulement, comme représenté au dessin, la pièce auxiliaire 10 étant à cet effet entraînée en rotation autour de la portée 8 du stator.

La pièce auxiliaire 10 est de préférence réalisée en matière plastique. Lors du montage du moteur dans un appareil, la pièce 10 est détachée du stator et le toron de fils 6 est détaché de la pièce auxiliaire pour être fixé aux bornes de l'alimentation électrique de l'appareil ou du dispositif destiné à être équipé du moteur.

Le deuxième mode d'exécution, représenté à la figure 2, diffère du premier mode d'exécution en ce que le logement pour le rangement du toron de fils 6 est constitué essentiellement par un prolongement tubulaire 16 du stator, prolongement muni de crochets élastiques 17 sur lesquels vient s'accrocher, par un bourrelet 27, une pièce auxiliaire 20 de même forme que la pièce auxiliaire 10, mais sensiblement plus courte et munie comme elle d'une paroi radiale 21 venant fermer le logement et servant simultanément à la retenue du toron de fils.

Le troisième mode d'exécution, représenté à la figure 3, diffère du premier mode en ce que le toron de fils 6 sort du stator par un passage 18 situé à l'extérieur de la portée tubulaire 8 et est enroulé autour de la pièce auxiliaire 30 en forme de douille dont le fond 31 est muni d'encoches 32 pour la retenue de l'extrémité du toron de fils 6. Le toron de fils du stator est enroulé sur la pièce auxiliaire 30 par l'entraînement en rotation de cette pièce autour de la portée 8.

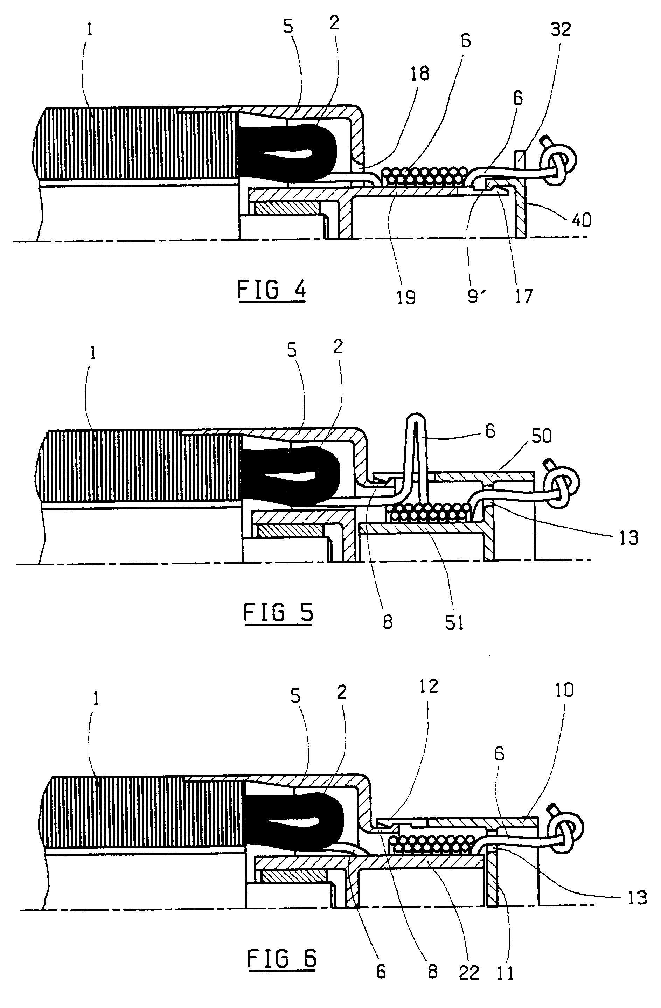

Le quatrième mode d'exécution, représenté à la figure 4, diffère du mode d'exécution précédent en ce que le stator présente un prolongement tubulaire 19 analogue au prolongement 16 de la figure 2 et en ce que la pièce auxiliaire 40 est courte et vient s'accrocher sur les crochets élastiques 17 par un bourrelet 9'. Le toron de fils 6 est enroulé autour du prolongement 19 par l'entraînement en rotation de la pièce auxiliaire 40.

Le cinquième mode d'exécution, représenté à la figure 5, diffère du premier mode d'exécution représenté à la figure 1 en ce que la pièce auxiliaire 10 est remplacée par une pièce auxiliaire 50 munie d'une partie intérieure 51 cylindrique et concentrique à la partie extérieure tubulaire de la pièce auxiliaire. Le toron de fils 6 est enroulé autour de la partie 51 par l'entraînement en rotation de la pièce auxiliaire 50 sur la portée 8 du stator.

Le sixième mode d'exécution, représenté à la figure 6, diffère du premier mode d'exécution en ce que le stator présente un prolongement cylindrique 22 coaxial à la portée 8 et autour duquel vient s'enrouler le toron de fils 6 lors de l'entraînement en rotation de la pièce auxiliaire.

Le septième mode d'exécution diffère du premier mode d'exécution en ce que la pièce auxiliaire 10 est remplacée par une pièce auxiliaire 70 dont la paroi transversale 71 correspondant à la paroi 11 présente un passage 72 pour un mandrin 23 dont l'extrémité est en outre guidée par un guidage 24 formé dans le stator. Le toron de fils 6 est enroulé sur le mandrin 23 par l'entraînement en rotation de la pièce auxiliaire 70, puis le mandrin 23 est retiré. Ce mandrin auxiliaire permet de former un enroulement régulier et compact du toron de fils 6.

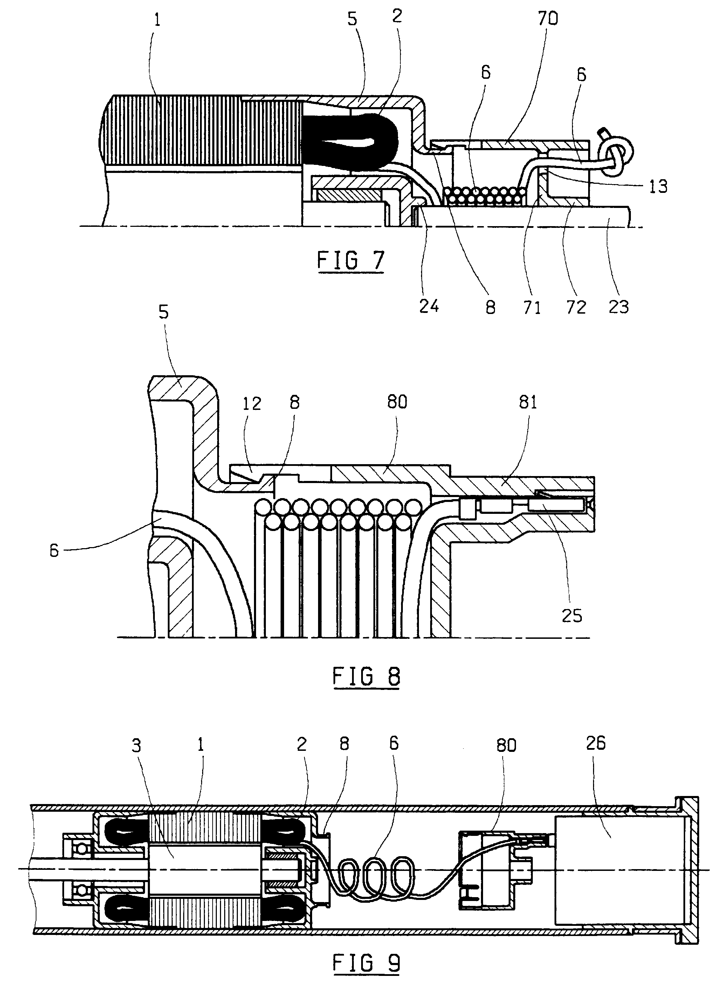

La figure 8 représente un huitième mode d'exécution dans lequel la pièce auxiliaire est utilisée comme connecteur. Ce mode d'exécution diffère du premier mode d'exécution en ce qu'il comprend une pièce auxiliaire 80 munie d'un bec 81 dans lequel des cosses 25 préalablement serties aux extrémités du toron de fils 6 sont fixées avant l'accrochage de la pièce auxiliaire 80 au stator. Lors de l'installation du moteur, la pièce auxiliaire 80 est détachée du stator et connectée à l'alimentation électrique.

La figure 9 représente un stator selon le dernier mode d'exécution monté dans un moteur tubulaire. La pièce auxiliaire 80 a été détachée du stator et connectée à un bloc d'alimentation 26.

## Revendications

1. Stator de moteur électrique bobiné (1) comprenant des moyens pour le rangement d'une certaine longueur de fil de bobinage du stator dans l'attente de son branchement ultérieur, caractérisé en ce qu'il est équipé d'une pièce auxiliaire amovible (10 ; 20 ; 30 ; 40 ; 50 ; 70 ; 80) munie, d'une part, de moyens d'accrochage temporaire (12 ; 27) au stator et, d'autre part, de moyens de fixation temporaire (13 ; 32 ; 81) de l'extrémité des fils (6) du bobinage du stator et qu'il présente des moyens d'accrochage (9 ; 17) complémentaires de ceux de la pièce auxiliaire, la pièce auxiliaire accrochée au stator constituant, avec le stator, un dispositif de rangement temporaire en vrac ou enroulés en bobine des fils du bobinage du stator.

2. Stator selon la revendication 1, caractérisé en ce que les moyens d'accrochage du stator sont formés sur une portée axiale cylindrique (8 ; 16 ; 19) du stator et que la pièce auxiliaire vient s'accrocher sur cette portée par une partie circulaire.

3. Stator selon la revendication 2, caractérisé en ce que la partie circulaire de la pièce auxiliaire (10 ; 50 ; 70) est tubulaire et au moins partiellement fermée à une extrémité de manière à constituer un logement de rangement pour les fils du stator.

4. Stator selon la revendication 3, caractérisé en ce que la pièce auxiliaire présente une partie intérieure cylindrique (51) concentrique à la partie tubulaire d'accrochage et sur laquelle les fils du stator sont enroulables par l'entraînement en rotation de la pièce auxiliaire autour de la portée du stator.

5. Stator selon la revendication 3, caractérisé en ce que la pièce auxiliaire (70) présente un passage axial (72) permettant l'introduction d'un mandrin (23) pour l'enroulement des fils du stator sur ce mandrin par l'entraînement en rotation de la pièce auxiliaire sur la portée du stator.

6. Stator selon la revendication 2, caractérisé en ce que la portée axiale (16) du stator est tubulaire et constitue un logement de rangement pour les fils du stator, ce logement étant fermé par la pièce auxiliaire (20).

7. Stator selon l'une des revendications 3 ou 6, caractérisé en ce que le stator présente une partie cylindrique (22) concentrique à la portée axiale du stator et de diamètre inférieur au diamètre de cette portée axiale, les fils du stator pouvant être enroulés sur cette partie cylindrique par l'entraînement en rotation de la pièce auxiliaire sur la portée du stator.

8. Stator selon la revendication 2, caractérisé en ce que la portée cylindrique axiale (8 ; 19) du stator et la partie circulaire d'accrochage de la pièce auxiliaire (30 ; 40) constituent un tambour sur lequel les fils du stator peuvent être enroulés par l'entraînement en rotation de la pièce auxiliaire sur la portée cylindrique du stator.

9. Stator selon l'une des revendications 1 à 8, caractérisé en ce que les extrémités des fils du stator sont fixés à demeure à la pièce auxiliaire (80) et que celle-ci constitue également un connecteur.

## Patentansprüche

1. Gewickelter Ständer eines Elektromotors mit Mitteln zum Unterbringen einer bestimmten Länge an Wicklungsdraht des Stators, in Bereitschaft für seinen späteren Anschluss, dadurch gekennzeichnet, dass er mit einem abnehmbaren Hilfsteil (10; 20; 30; 40; 50; 70; 80) ausgerüstet ist, welches einerseits mit Mitteln (12; 27) zum vorübergehenden Anhaken am Ständer und andererseits mit Mitteln (13; 32; 81) zum vorübergehenden Befestigen des Endes des Wicklungsdrahts (6) des Ständers versehen ist, und dass er Mittel (9; 17) zum Anhaken aufweist, die zu denen des Hilfsteils komplementär sind, wobei das am Ständer angehakte Hilfsteil mit dem Ständer eine Vorrichtung zur vorübergehenden Unterbringung der Wicklungsdrähte des Ständers in loser Form oder in zu einer Spule gewickelter Form bildet.

2. Ständer nach Anspruch 1, dadurch gekennzeichnet, dass die zum Anhaken bestimmten Mittel des Ständers auf einer axialen zylindrischen Auflagefläche (8; 16; 19) des Ständers gebildet sind und dass das Hilfsteil auf dieser Auflagefläche mit einem kreisförmigen Teil anhakbar ist.

3. Ständer nach Anspruch 2, dadurch gekennzeichnet, dass der kreisförmige Teil des Hilfsteils (10; 50; 70) röhrenförmig und wenigstens teilweise an einem Ende geschlossen ist, derart, dass es einen Unterbringungsraum für die Drähte des Ständers bildet.

4. Ständer nach Anspruch 3, dadurch gekennzeichnet, dass das Hilfsteil einen zylindrischen inneren Teil (51) aufweist, der zum röhrenförmigen, zum Anhaken bestimmten Teil konzentrisch ist und auf welchem die Drähte des Ständers aufwickelbar sind, indem das Hilfsteil um die Auflagefläche des Ständers in Drehung versetzt wird.

5. Ständer nach Anspruch 3, dadurch gekennzeichnet, dass das Hilfsteil (70) einen axialen Durchlass (72) aufweist, welcher das Einführen eines Dorns (23) zum Aufwickeln der Drähte des Ständers auf diesem Dorn erlaubt, indem das Hilfsteil auf der Auflagefläche des Ständers in Drehung versetzt wird.

6. Ständer nach Anspruch 2, dadurch gekennzeichnet, dass die axiale Auflagefläche (16) des Ständers röhrenförmig ist und einen Unterbringungsraum für die Drähte des Ständers bildet, wobei dieser Raum durch das Hilfsteil (20) geschlossen wird.

7. Ständer nach einem der Ansprüche 3 oder 6, dadurch gekennzeichnet, dass der Ständer ein zylindrisches Teil (22) aufweist, welches zur axialen Auflagefläche des Ständers konzentrisch ist und einen Durchmesser hat, der kleiner als der Durchmesser dieser axialen Auflagefläche ist, wobei die Drähte des Ständers auf diesem zylindrischen Teil aufwickelbar sind, indem das Hilfsteil auf der Auflagefläche des Ständers in Drehung versetzt wird.

8. Ständer nach Anspruch 2, dadurch gekennzeichnet, dass die axiale zylindrische Auflagefläche (8; 19) des Ständers und der zum Anhaken bestimmte kreisförmige Teil des Hilfsteils (30; 40) eine Trommel bilden, auf welcher die Drähte des Ständers aufwickelbar sind, indem das Hilfsteil auf der zylindrischen Auflagefläche des Ständers in Drehung versetzt wird.

9. Ständer nach einem der Ansprüche 1 bis 8, dadurch gekennzeichnet, dass die Enden der Drähte des Ständers ständig am Hilfsteil (80) befestigt sind und dass dieses Hilfsteil auch ein Steckerteil bildet.

## Claims

1. A wound electric-motor stator (1) comprising means for storing a particular length of winding wire of the stator while waiting for its subsequent connection, characterized in that it is equipped with an auxiliary removable piece (10; 20; 30; 40; 50; 70; 80) provided, on the one hand, with means (12; 27) for temporary catching on the stator and, on the other hand, with means (13; 32; 81) for temporary fastening the end of the wires (6) of the winding of the stator, and in that it has catching means (9; 17) complementary with those of the auxiliary piece, the auxiliary piece caught on the stator constituting, together with the stator, a device for the temporary storage of the wires of the winding of the stator in loose or wounded form.

2. The stator as claimed in claim 1, characterized in that the catching means of the stator are formed on a cylindrical axial bearing surface (8; 16; 19) of the stator, and in that the auxiliary piece catches on this bearing surface by means of a circular part.

3. The stator as claimed in claim 2, characterized in that the circular part of the auxiliary piece (10; 50; 70) is tubular and at least partially closed at one end so as to form a storage receptacle for the wires of the stator.

4. The stator as claimed in claim 3, characterized in that the auxiliary piece has a cylindrical inner part (51) which is concentric with the tubular catching part and onto which the wires of the stator can be wound by driving the auxiliary piece in rotation about the bearing surface of the stator.

5. The stator as claimed in claim 3, characterized in that the auxiliary piece (70) has an axial passage (72) making it possible to introduce a mandrel (23) for winding the wires of the stator onto this mandrel by driving the auxiliary piece in rotation on the bearing surface of the stator.

6. The stator as claimed in claim 2, characterized in that the axial bearing surface (16) of the stator is tubular and forms a storage receptacle for the wires of the stator, this receptacle being closed by the auxiliary piece (20).

7. The stator as claimed in anyone of the claims 3 or 6, characterized in that the stator has a cylindrical part (22) concentric with the axial bearing surface of the stator and of a diameter smaller than the diameter of this axial bearing surface, the wires of the stator being capable of being wound onto the cylindrical part by driving the auxiliary piece in rotation on the bearing surface of the stator.

8. The stator as claimed in claim 2, characterized in that the axial cylindrical bearing surface (8; 19) of the stator and the circular catching part of the auxiliary piece (30; 40) form a drum, onto which the wires of the stator can be wound by driving the auxiliary piece in rotation on the cylindrical bearing surface of the stator.

9. The stator as claimed in anyone of claims 1 to 8, characterized in that the ends of the wires of the stator are fastened permanently to the auxiliary piece (80), and in that the latter also forms a connector.
